# EUROPEAN PATENT APPLICATION

(11) **EP 4 734 026 A1**
(43) Date of publication of application: **29.04.2026**
(21) Application number: 24223482.1
(22) Date of filing: 27.12.2024
(51) Int. Cl.: G06Q 20/02, G06Q 20/32, G06Q 20/36

(54) **MOBILE PAYMENT METHOD AND SYSTEM**

(30) Priority: 25.10.2024 TW 113140926
(71) Applicant: Leadot Innovation, Inc., Kaohsiung City 80266 (TW)
(72) Inventor: WANG, Justin, 80266 Kaohsiung City (TW)
(74) Representative: Zimmermann, Tankred Klaus

(57) **Abstract**

A mobile payment method and system. The mobile payment method includes steps of: a business end providing payment trigger information; a consumer end establishing a communication connection with a subrogation service end based on the payment trigger information; the subrogation service end providing a mobile payment interface to the consumer end based on the payment trigger information, wherein the mobile payment interface contains multiple mobile payment links; and when the consumer end selects one of the mobile payment links, a mobile payment action between the subrogation service end and the consumer end is completed by using a mobile payment tool corresponding to the selected mobile payment link.

## Description

### BACKGROUND

### Technology Field

The present invention relates to a payment method and system and, in particular, to a mobile payment method and system applied to the mobile payment applications.

### Description of Related Art

In recent years, the mobile payment has become one of the main payment methods. Generally speaking, the mobile payment is to use a mobile device, such as a mobile phone, a tablet, a smart watch, or the likes, as a carrier, which is further bound with credit cards, debit cards, bank accounts, prepaid accounts, point discounts, or the likes, for deduction or payment.

For example, when consumers make purchases at stores, they can use their mobile devices to scan codes (e.g. barcodes or QR codes), and then perform mobile payment actions through appropriate mobile payment platforms (or mobile payment tools). In order to successfully complete the mobile payment action, the prerequisite is that both the consumer and the store use the same mobile payment platform. For example, if the store provides the mobile payment code (e.g. QR code) of the mobile payment platform A, the consumer's mobile device must install with the mobile payment application A of the mobile payment platform A, so that the mobile payment action can be successfully completed through the mobile payment platform A. In other words, if the store only provides the mobile payment code of the mobile payment platform A, but the consumer's mobile device does not install with the mobile payment application A, the mobile payment action cannot be successfully completed.

In order to avoid the above-mentioned situation of being unable to successfully complete the mobile payment action, the stores may have to apply to different mobile payment platforms to obtain corresponding multiple mobile payment codes to cope with numerous consumers. However, regarding today's booming mobile payment business, there are dozens of mobile payment platforms on the market, such as Apple Pay, Google Pay, TW Pay, PayPal, Line Pay, Fami Pay, PX Pay, JKO Pay, or the likes. For store ends, even applying for mobile payment codes for only three or four mobile payment platforms is very complicated and troublesome processes.

Therefore, it is desired to provide a mobile payment method and system that can decrease the complicated and troublesome processes of the store ends in applying for mobile payment codes for different mobile payment platforms.

### SUMMARY

In view of the foregoing, an objective of this invention is to provide a mobile payment method and system that can decrease the complicated and troublesome processes of the store ends in applying for mobile payment codes for different mobile payment platforms.

To achieve the above, a mobile payment method of this invention is applied to a mobile payment system, which includes a subrogation service end, at least one business end and at least one consumer end. The mobile payment method includes the following steps of: the business end providing payment trigger information; the consumer end establishing a communication connection with the subrogation service end based on the payment trigger information; the subrogation service end providing a mobile payment interface to the consumer end based on the payment trigger information, wherein the mobile payment interface contains a plurality of mobile payment links; and when the consumer end selects one of the mobile payment links, a mobile payment action between the subrogation service end and the consumer end is completed by using a mobile payment tool corresponding to the selected mobile payment link.

In one embodiment, the mobile payment method further includes a step of: when the mobile payment action is completed, the subrogation service end sending a payment success notification to the business end.

In one embodiment, the mobile payment action at least comprises: the consumer end paying a payment to the subrogation service end.

In one embodiment, the mobile payment method further includes a step of: when the mobile payment action is completed, the subrogation service end further performing a settlement action to pay a payment to the business end.

In one embodiment, the subrogation service end comprises a business-end database, the business-end database comprises a plurality of business-end data and a plurality of identification data corresponding to the business-end data, respectively, and the payment trigger information comprises one of the identification data corresponding to the business end.

In one embodiment, each one of the identification data comprises a barcode, a two-dimensional code, and/or a specific pattern.

In one embodiment, the subrogation service end comprises a mobile payment database, the mobile payment database comprises a plurality of mobile payment tool data, and the plurality of mobile payment links of the mobile payment interface respectively corresponding to the plurality of mobile payment tool data.

In one embodiment, the payment trigger information comprises a payment amount information, and the consumer end completes the mobile payment action through the mobile payment tool and based on the payment amount information.

To achieve the above, a mobile payment system of this invention includes at least one business end, at least one consumer end, and a subrogation service end. The business end is configured for providing a payment trigger information. The consumer end is configured for receiving the payment trigger information. The consumer end establishes a communication connection with the subrogation service end based on the payment trigger information, and the subrogation service end provides a mobile payment interface to the consumer end based on the payment trigger information. The mobile payment interface contains a plurality of mobile payment links. When the consumer end selects one of the mobile payment links, a mobile payment action between the subrogation service end and the consumer end is completed by using a mobile payment tool corresponding to the selected mobile payment link.

In one embodiment, when the mobile payment action is completed, the subrogation service end sends a payment success notification to the business end.

In one embodiment, the mobile payment action at least includes: the consumer end paying a payment to the subrogation service end.

In one embodiment, when the mobile payment action is completed, the subrogation service end further performs a settlement action to pay a payment to the business end.

In one embodiment, the subrogation service end includes a business-end database, and the business-end database includes a plurality of business-end data and a plurality of identification data corresponding to the business-end data, respectively.

In one embodiment, each one of the identification data comprises a barcode, a two-dimensional code, and/or a specific pattern.

In one embodiment, the payment trigger information includes one of the identification data corresponding to the business end.

In one embodiment, the subrogation service end includes a mobile payment database, the mobile payment database includes a plurality of mobile payment tool data, and the plurality of mobile payment links of the mobile payment interface respectively corresponding to the plurality of mobile payment tool data.

In one embodiment, the payment trigger information includes a payment amount information, and the consumer end completes the mobile payment action through the mobile payment tool and based on the payment amount information.

As mentioned above, the mobile payment method and system of this invention includes the following steps of: the business end providing payment trigger information; the consumer end establishing a communication connection with the subrogation service end based on the payment trigger information; the subrogation service end providing a mobile payment interface to the consumer end based on the payment trigger information, wherein the mobile payment interface contains a plurality of mobile payment links; and when the consumer end selects one of the mobile payment links, a mobile payment action between the subrogation service end and the consumer end is completed by using a mobile payment tool corresponding to the selected mobile payment link. Based on the above steps, the subrogation service end can be intervened between the business end and the consumer end during the mobile payment process. Therefore, the consumer end can perform mobile payment actions to the subrogation service end. That is, the subrogation service end can be involved in the mobile payment action on behalf of the business end, so the business end does not need to apply for the mobile payment code of the corresponding mobile payment platform installed at the consumer end. Moreover, even if the mobile payment tool used on the consumer end does not work in the area or country where the business end is located, the consumer end can still use this mobile payment tool to complete the mobile payment action with the participation of the subrogation service end, and the business end can successfully receive the payment without applying for the mobile payment code of the corresponding mobile payment platform. In other words, the mobile payment method and system of this invention can decrease the complicated and troublesome processes of the business ends in applying for mobile payment codes for different mobile payment platforms. For the business ends, it is a very simple and convenient way to use the mobile payment method and system of the present invention to serve consumers with mobile payment needs.

### BRIEF DESCRIPTION OF THE DRAWINGS

The invention will become more fully understood from the detailed description and accompanying drawings, which are given for illustration only, and thus are not limitative of the present invention, and wherein:
FIG. 1 is a flow chart of a mobile payment method according to an embodiment of this invention;
FIG. 2 is a schematic diagram showing a mobile payment system according to an embodiment of this invention;
FIG. 3A is a schematic diagram showing a mobile payment interface displayed on the screen;
FIG. 3B is a schematic diagram showing multiple mobile payment tool data in the mobile payment database; and
FIG. 3C is a schematic diagram showing multiple business-end data and multiple identification data in the business-end database.

### DETAILED DESCRIPTION OF THE INVENTION

The present invention will be apparent from the following detailed description, which proceeds with reference to the accompanying drawings, wherein the same references relate to the same elements.

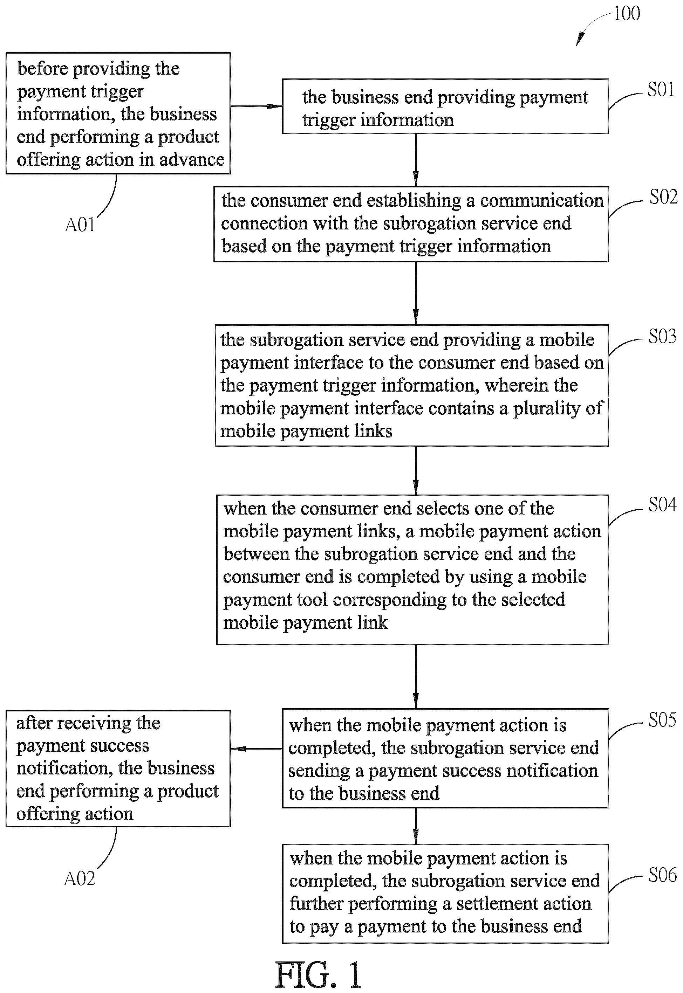

FIG. 1 is a flow chart of a mobile payment method 100 according to an embodiment of this invention.

As shown in FIG. 1, the mobile payment method 100 of this embodiment includes the following steps of: the business end providing payment trigger information (step S01); the consumer end establishing a communication connection with the subrogation service end based on the payment trigger information (step S02); the subrogation service end providing a mobile payment interface to the consumer end based on the payment trigger information, wherein the mobile payment interface contains a plurality of mobile payment links (step S03); and when the consumer end selects one of the mobile payment links, a mobile payment action between the subrogation service end and the consumer end is completed by using a mobile payment tool corresponding to the selected mobile payment link (step S04).

In addition, the mobile payment method 100 may further include the following steps of: when the mobile payment action is completed, the subrogation service end sending a payment success notification to the business end (step S05); and when the mobile payment action is completed, the subrogation service end further performing a settlement action to pay a payment to the business end (step S06).

Moreover, the mobile payment method 100 may further include the step of: the business end offering a product to the consumer end. In general, the step of offering a product can be performed before the step of the business end providing payment trigger information (step S01). For example, the step A01 includes: before providing the payment trigger information, the business end performing a product offering action in advance. In another case, the step of offering a product can be performed after, for example, the step of the business end receiving the payment success notification (step S05). For example, the step A02 includes: after receiving the payment success notification, the business end performing a product offering action.

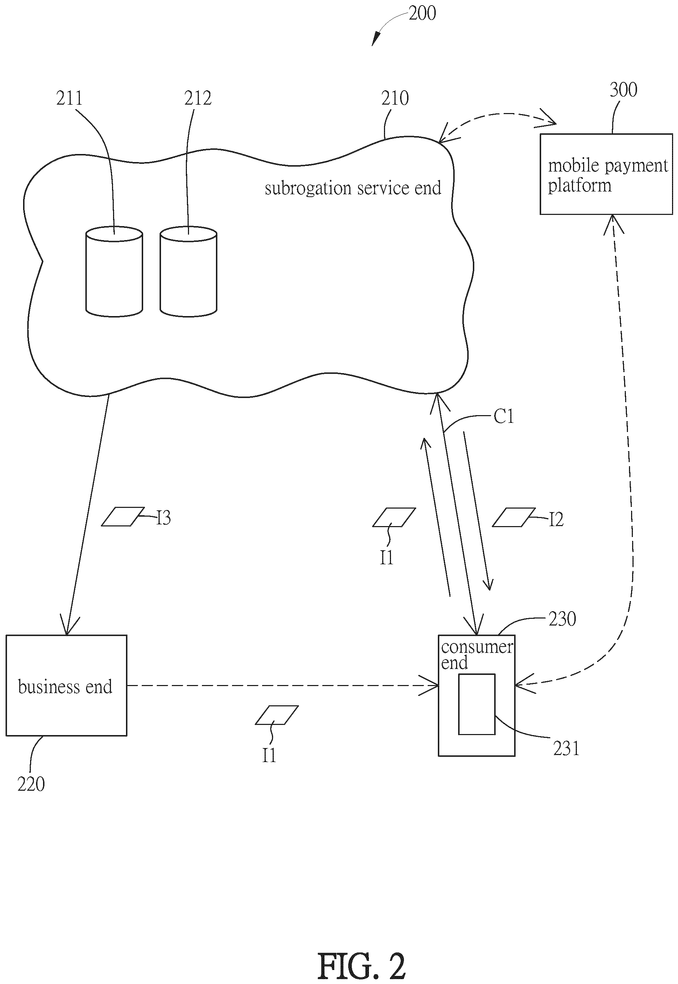

To be noted, the mobile payment method 100 of this invention is applied to a mobile payment system 200 (as shown in FIG. 2), which includes a subrogation service end 210, at least one business end 220, and at least one consumer end 230.

As shown in FIG. 2, the subrogation service end 210 can be, for example but not limited to, a cloud server, the business end 220 can be, for example but not limited to, an electronic terminal installed at the store end (e.g. an electronic cashier system), and the consumer end 230 can be, for example but not limited to, the consumer's personal mobile communication device, such as a mobile phone, a smart watch, or the like. To be noted, the above description is only an example, and the present invention is not limited thereto.

In the following, practical application examples of the mobile payment method 100 and the mobile payment system 200 according to the embodiment of the present invention will be described in several different scenarios.

Referring to FIGS. 1 and 2, in the first scenario, for example, a consumer goes to a restaurant to dine, and the restaurant (business end) provides the meal (an application of the step A01), and after finishing the meal, the consumer can use the mobile payment method 100 to make a payment.

First, for example, the consumer (the consumer end 210) can make a checkout request to the restaurant (the business end 220). Then, the business end 220 can provide a payment triggering information I1 (step S01). In detail, the restaurant staff can operate the cashier terminal (the business end 220), so that the cashier terminal, for example, generates a two-dimensional barcode (e.g. QR code) with the payment trigger information I1. In this embodiment, the payment trigger information I1 can include the identification data corresponding to the restaurant, and the payment trigger information I1 may further include the payment amount information, which corresponds to the consumer's consumption amount at the restaurant, such as meal costs and tips. Then, the consumer can use his or her mobile phone (the consumer end 230) to scan the QR code containing the payment trigger information I1 so as to obtain the payment trigger information I1, and to retrieve the identification information corresponding to the restaurant and the payment amount information from the payment trigger information I1.

Next, the consumer end 230 establishes a communication connection C1 with the subrogation service end 210 based on the payment trigger information I1 (step S02). Specifically, the payment trigger information I1 can also carry the link data corresponding to the subrogation service end 210, such as the website address of the subrogation service end 210. Therefore, the consumer end 230 (e.g. the mobile phone) can establish a communication connection C1 with the subrogation service end 210 through the wireless communication network (Internet) based on the link data.

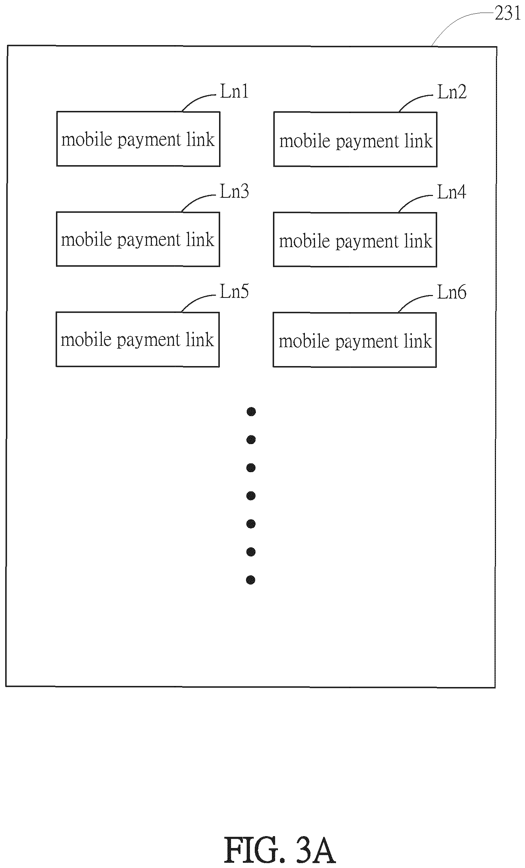

Afterwards, the subrogation service end 210 provides a mobile payment interface 231 to the consumer end 230 based on the payment trigger information I1, and the mobile payment interface 231 includes a plurality of mobile payment links (referring to step S03). Specifically, after establishing the communication connection C1 between the consumer end 230 and the subrogation service end 210, the subrogation service end 210 can, for example, obtain the payment trigger information I1 from the consumer end 230, the identification data corresponding to the business end 220 from the payment trigger information I1, and/or the payment amount information from the payment trigger information I1. Then, the subrogation service end 210 can provide a mobile payment interface information I2 to the consumer end 230 based on the obtained identification information and the payment amount data. After receiving the mobile payment interface information I2, the consumer end 230 can display the mobile payment interface 231 on its screen accordingly. FIG. 3A shows an example of the mobile payment interface 231 displayed on the screen, which may, for example, include a plurality of mobile payment links Ln1 to Ln6. To be noted, the above description is only an example, and the present invention is not limited thereto.

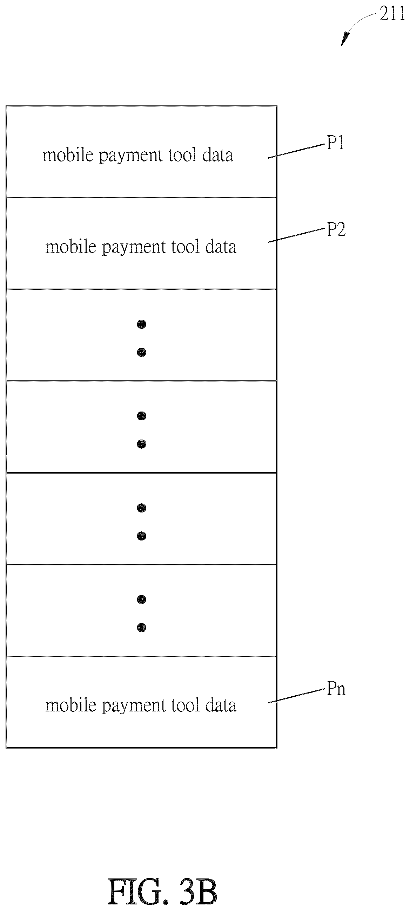

Generally speaking, in order for the mobile payment system 200 to meet the mobile payment needs of most consumers, the service provider must make an agreement or contract with different mobile payment platforms in advance so as to involve multiple mobile payment tools into the mobile payment interface 231. For example, as shown in FIG. 3B, the subrogation service end 210 may include a mobile payment database 211, which includes a plurality of mobile payment tool data P1~Pn, and the mobile payment interface 231 includes multiple mobile payment links corresponding to or selected from the mobile payment tool data P1~Pn. For example, as shown in FIG. 3A, the mobile payment interface 231 may provide six mobile payment links Ln1~Ln6, which respectively represent six different mobile payment tools, such as electronic payment tools (e.g. Apple Pay, Line Pay, etc.), credit card payment tools, debit card payment tools, prepaid card payment tools, bank transfer payment tools, etc. This invention is not limited thereto. To be noted, the mobile payment tools that can be contracted can be dynamically changed. That is, new mobile payment tools can be added or old mobile payment tools can be eliminated at any time, and the mobile payment tools that can be contracted do not have limitation in regions or countries.

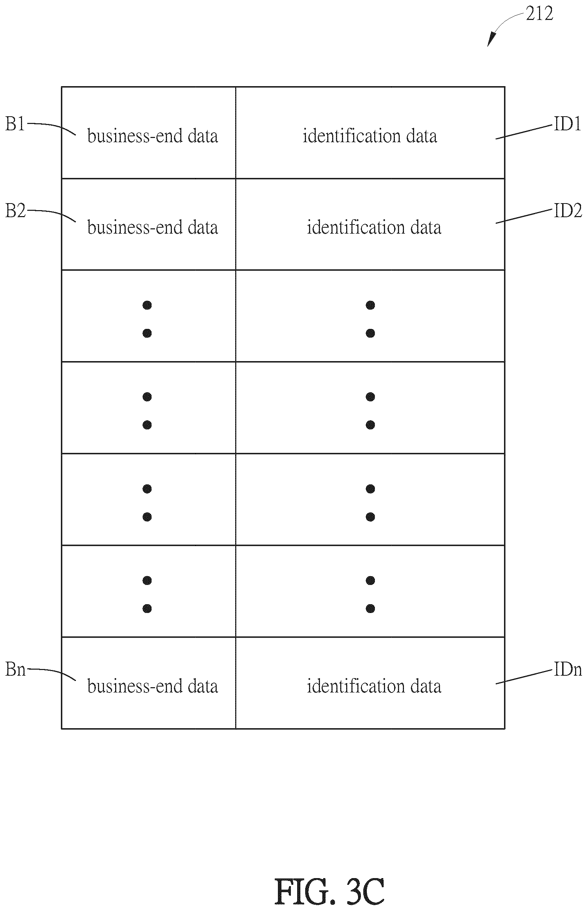

In addition, in order to use the mobile payment system 200, any merchant must make an agreement or contract with the service provider in advance. This step can also be understood as an application or registration action, so that the merchant can join the mobile payment system 200 and become the member of multiple business ends 220. Correspondingly, the subrogation service end 210 may, for example, include a business-end database 212, which includes a plurality of business-end data and a plurality of identification data corresponding to the plurality of business-end data. As shown in FIG. 3C, in the business-end database 212, each one of the business-end data corresponds to one of the business-end data (B1~Bn) of the registered merchants, and corresponding one of the identification data (ID1~IDn). The identification data can be, for example but not limited to, codes (e.g. barcodes or QR codes) and/or specific patterns corresponding to the merchants. The specific pattern can be, for example, phone number, EIN, address, store name, signature, trademark, portrait, totem, etc., and this invention is not limited thereto. For example, the consumer end 230 can scan or capture the merchant's code (e.g. QR code) or specific pattern (e.g. signature or trademark), and transmit the obtained code or specific pattern as identification data (part of the mobile payment interface information I2) to the subrogation service end 210. Therefore, the subrogation service end 210 can confirm the corresponding merchant at this transaction based on the records in the business-end database 212. For example, the identification data ID2 corresponds to the business-end data B2.

Afterwards, when the consumer end 230 selects one of the mobile payment links, the mobile payment action between the subrogation service end 210 and the consumer end 230 can be completed by using the mobile payment tool corresponding to the selected mobile payment link (step S04). Specifically, when the mobile payment interface 231 displayed on the screen of the consumer end 230 (e.g. a mobile phone) provides six mobile payment links Ln1~Ln6, the consumer can select one applicable mobile payment tool therefrom. For example, the consumer wants to use Apple Pay as the mobile payment tool, he or she can select, for example, the mobile payment link Ln3 corresponding to Apple Pay. In this case, the subrogation service end 210 can complete the mobile payment action through the mobile payment platform 300 based on the selected mobile payment link Ln3 and the payment amount data from the above-mentioned payment trigger information I1. In brief, the subrogation service end 210 can, based on the obtained information including the payer (i.e., the consumer end 230), the payee (i.e., the business end 220), the consumption amount (i.e. the payment amount data) and the payment method (i.e., the mobile payment link or mobile payment tool), communicate with the mobile payment platform 300 and complete the mobile payment action. To be noted, this mobile payment action is that the consumer end 230 pays the payment to the subrogation service end 210 through the mobile payment platform 300.

Finally, after the mobile payment action is completed, the subrogation service end 210 can send a payment success notification I3 to the business end 220 (step S05). Generally, if the business end 220 receives the payment success notification 13, the merchant can transfer the payment success message to the consumer. Otherwise, if the business end 220 fails to receive the payment success notification 13, the merchant may ask the consumer to check the progress of the mobile payment, or to re-scan the code to perform the mobile payment again (e.g. performing the aforementioned steps S01 to S04 again).

In addition, after the mobile payment action is completed (step S05), the subrogation service end 210 may further perform a settlement action to pay the payment to the business end 220 (step S06). Generally, this settlement action can be performed regularly (e.g. once a month). For example, the subrogation service end 210 can transfer the accumulated payment collected by subrogation to the bank account of the business end 220 regularly (e.g. per month). This invention is not limited thereto. In one embodiment, the subrogation service end 210 may also subtract the system service fee from the accumulated payment, and then transfer the remaining amount to the bank account of the business end 220. The invention is not limited thereto.

As mentioned above, in the mobile payment system 200 of this embodiment, the subrogation service end 210 can establish a virtual store for the business end 220, and the consumer end 230 performs the mobile payment action on this virtual store (the subrogation service end 210). Therefore, no matter what kind of mobile payment tool the consumer end 230 uses, the business end 220 can successfully collect the payment through the subrogation service end 210, so the merchant does not need to apply for mobile payment codes for multiple mobile payment platforms.

Referring to FIGS. 1 and 2, in the second scenario, for example, a consumer goes to a store (business end) to purchase electronic products. The store staff may require the consumer to check out before taking away the purchased products (an application of the step A02). In this case, the consumer can use the mobile payment method 100 (including the steps S01 to S05) to perform the payment action, and the business end 220 may perform the product offering action (step A02) after receiving the payment success notification I3 (step S05). To be noted, the steps S01 to S05 and the additional step S06 can be referred to the above-mentioned embodiments, so the detailed descriptions thereof will be omitted.

To be noted, for example, when a foreign tourist (consumer) comes to a local store to make a purchase, the consumer may want to use his or her usual mobile payment tool, which is usually the mobile payment tool in the consumer's home country. However, this mobile payment tool may not work in other countries (i.e., the local store). In contrast, when the local store serves the foreign tourist (consumer), the merchant usually needs to inform the consumer that only the local mobile payment tools can be used and the mobile payment tools from foreign countries do not work. However, through the mobile payment method and system of the present invention, the subrogation service end can establish a virtual store for the merchant. Therefore, not only the foreign tourists (consumers) can use their usual mobile payment tools to pay, but the local stores can also collect the payments smoothly. This is very convenient for both consumers and merchants. In addition, the subrogation service end can contract with mobile payment platforms or tools used in different countries or regions to provide powerful mobile payment services.

In summary, the mobile payment method and system of this invention includes the following steps of: the business end providing payment trigger information; the consumer end establishing a communication connection with the subrogation service end based on the payment trigger information; the subrogation service end providing a mobile payment interface to the consumer end based on the payment trigger information, wherein the mobile payment interface contains a plurality of mobile payment links; and when the consumer end selects one of the mobile payment links, a mobile payment action between the subrogation service end and the consumer end is completed by using a mobile payment tool corresponding to the selected mobile payment link. Based on the above steps, the subrogation service end can be intervened between the business end and the consumer end during the mobile payment process. Therefore, the consumer end can perform mobile payment actions to the subrogation service end. That is, the subrogation service end can be involved in the mobile payment action on behalf of the business end, so the business end does not need to apply for the mobile payment code of the corresponding mobile payment platform installed at the consumer end. Moreover, even if the mobile payment tool used on the consumer end does not work in the area or country where the business end is located, the consumer end can still use this mobile payment tool to complete the mobile payment action with the participation of the subrogation service end, and the business end can successfully receive the payment without applying for the mobile payment code of the corresponding mobile payment platform. In other words, the mobile payment method and system of this invention can decrease the complicated and troublesome processes of the business ends in applying for mobile payment codes for different mobile payment platforms. For the business ends, it is a very simple and convenient way to use the mobile payment method and system of the present invention to serve consumers with mobile payment needs.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A mobile payment method, applied to a mobile payment system, the mobile payment system comprises a subrogation service end, at least one business end and at least one consumer end, the mobile payment method comprising steps of:
the business end providing payment trigger information;
the consumer end establishing a communication connection with the subrogation service end based on the payment trigger information;
the subrogation service end providing a mobile payment interface to the consumer end based on the payment trigger information, wherein the mobile payment interface contains a plurality of mobile payment links; and
when the consumer end selects one of the mobile payment links, a mobile payment action between the subrogation service end and the consumer end is completed by using a mobile payment tool corresponding to the selected mobile payment link.

2. The mobile payment method of claim 1, further comprising a step of:
when the mobile payment action is completed, the subrogation service end sending a payment success notification to the business end.

3. The mobile payment method of claim 1, wherein the mobile payment action at least comprises: the consumer end paying a payment to the subrogation service end.

4. The mobile payment method of claim 1, further comprising a step of:
when the mobile payment action is completed, the subrogation service end further performing a settlement action to pay a payment to the business end.

5. The mobile payment method of claim 1, wherein the subrogation service end comprises a business-end database, the business-end database comprises a plurality of business-end data and a plurality of identification data corresponding to the business-end data, respectively, and the payment trigger information comprises one of the identification data corresponding to the business end.

6. The mobile payment method of claim 5, wherein each one of the identification data comprises a barcode, a two-dimensional code, and/or a specific pattern.

7. The mobile payment method of claim 1, wherein the subrogation service end comprises a mobile payment database, the mobile payment database comprises a plurality of mobile payment tool data, and the plurality of mobile payment links of the mobile payment interface respectively corresponding to the plurality of mobile payment tool data.

8. The mobile payment method of claim 1, wherein the payment trigger information comprises a payment amount information, and the consumer end completes the mobile payment action through the mobile payment tool and based on the payment amount information.

9. A mobile payment system, comprising:
at least one business end for providing a payment trigger information;
at least one consumer end for receiving the payment trigger information; and
a subrogation service end, wherein the consumer end establishes a communication connection with the subrogation service end based on the payment trigger information, the subrogation service end provides a mobile payment interface to the consumer end based on the payment trigger information, and the mobile payment interface contains a plurality of mobile payment links;
wherein, when the consumer end selects one of the mobile payment links, a mobile payment action between the subrogation service end and the consumer end is completed by using a mobile payment tool corresponding to the selected mobile payment link.

10. The mobile payment system of claim 9, wherein when the mobile payment action is completed, the subrogation service end sends a payment success notification to the business end.

11. The mobile payment system of claim 9, wherein the mobile payment action at least comprises: the consumer end paying a payment to the subrogation service end.

12. The mobile payment system of claim 9, wherein when the mobile payment action is completed, the subrogation service end further performs a settlement action to pay a payment to the business end.

13. The mobile payment system of claim 9, wherein the subrogation service end comprises a business-end database, and the business-end database comprises a plurality of business-end data and a plurality of identification data corresponding to the business-end data, respectively, each one of the identification data comprises a barcode, a two-dimensional code, and/or a specific pattern, and the payment trigger information comprises one of the identification data corresponding to the business end.

14. The mobile payment system of claim 9, wherein the subrogation service end comprises a mobile payment database, the mobile payment database comprises a plurality of mobile payment tool data, and the plurality of mobile payment links of the mobile payment interface respectively corresponding to the plurality of mobile payment tool data.

15. The mobile payment system of claim 9, wherein the payment trigger information comprises a payment amount information, and the consumer end completes the mobile payment action through the mobile payment tool and based on the payment amount information.
